(19) Europäisches Patentamt
European Patent Office
Office européen des brevets

(11) Publication number: 0 533 425 B1

(12) # EUROPEAN PATENT SPECIFICATION

(45) Date of publication of patent specification: **28.06.95**

(51) Int. Cl.[6]: **B60C 15/04**, B60C 15/00

(21) Application number: **92308364.6**

(22) Date of filing: **15.09.92**

(54) **Heavy duty radial tyre.**

(30) Priority: **17.09.91 JP 267043/91**

(43) Date of publication of application:
**24.03.93 Bulletin 93/12**

(45) Publication of the grant of the patent:
**28.06.95 Bulletin 95/26**

(84) Designated Contracting States:
**DE FR GB NL**

(56) References cited:
**EP-A- 0 013 194**
**FR-A- 1 127 147**
**FR-A- 2 374 173**
**FR-A- 2 658 126**
**GB-A- 2 187 146**

**PATENT ABSTRACTS OF JAPAN vol. 7, no. 217 (M-245)(1362) 27 September 1983 & JP-A-58 112 810 (YOKOHAMA GOMU K.K.) 5. July 1983**

(73) Proprietor: **SUMITOMO RUBBER INDUSTRIES LIMITED**
**1-1 Tsutsuicho 1-chome**
**Chuo-ku**
**Kobe-shi**
**Hyogo-ken (JP)**

(72) Inventor: **Yamada, Munemitsu**
**134-9 Taniyagi,**
**Ookubo-cho**
**Akashi-shi,**
**Hyogo-ken (JP)**
Inventor: **Yamahira, Atsushi**
**13-10203 Kita-showacho**
**Nishinomiya-shi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

EP 0 533 425 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a heavy duty radial tyre, in which bead durability and airtightness are improved.

For heavy vehicles, e.g. bus, truck and the like, tubeless tyres are widely used.

In such a heavy duty tyre, the engaging force between the tyre beads and the bead seats of the rim must be large to maintain airtightness.

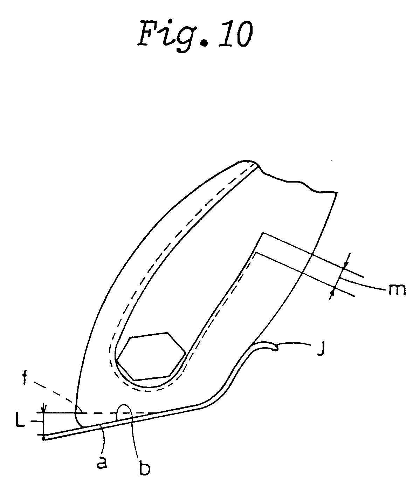

This is particularly important when the tyre load and inner pressure are very large. However, as shown in Fig.10, so called bead toe lifting (f) has been often observed, a phenomenon in which the bead toe (a) is lifted from the bead seat (b) even though the tyre is mounted on its regular rim and inflated to normal pressure and loaded to its normal load.

It was found that such toe lifting reduces not only airtightness but also bead durability.

Further, it was found that bead durability decreases in proportion to the increase in the amount (L) of bead toe lifting (f) as shown in Fig.9.

In the tyres in which bead toe lifting occurred, the larger the service pressure, the greater the bead toe lifting. Accordingly, the deformation of the bead portion was larger, and damage occurred earlier.

In the bead portion, the tensile stress in the carcass produced by the tyre inner pressure is generally radially outward and axially outward.

Therefore, in the ground contacting patch of the tyre, the bead core is forced towards the rim flange by the axial component of the tensile stress, which component is in direct proportion to the amount of tyre deflection.

On the other hand, the radial component increases circumferentially away from the ground contacting patch, and then the axially inside of the bead core is pulled radially outwards.

The direction of the resultant force to which the bead core is subjected is changed during running. Therefore, the axially outward bead rubber portion is compressed axially by the axially outward movement of the bead core and radially by the radially inward movement of the carcass turned up portion.

On the other hand, the axially inward bead rubber portion is pulled by the carcass main portion.

As a result, under heavy load and high pressure conditions, the bead rubber is subjected to a repeated large stress, and the rubber is permanently deformed.

Accordingly, the airtightness between the tyre beads and the bead seats of the rim is decreased.

Further, such permanently deformed rubber is liable to be cracked especially at points in the radially outward bead rubber region near the carcass ply turnup edge and the radially outer edge of the rim flange. The bead durability is greatly decreased by such a crack.

A prior art tyre showing the features of the preamble of claim 1 is known, e.g. from FR-A-2 658 126.

It is therefore, an object of the present invention to provide a heavy duty radial tyre, in which, by preventing the bead toe lifting, airtightness and bead durability are improved.

According to the present invention, a heavy duty radial tyre comprises a tread having tread edges, a pair of axially spaced bead portions having a bead base to fit a 15° tapered bead seat of its regular rim, a pair of sidewalls extending between the tread edges and the bead portions, a bead core disposed in each of the bead portions and having a polygonal cross sectional shape, a radial carcass extending between the bead portions and turned up around the bead cores, and a belt disposed radially outside the carcass and radially inside the tread portion, the polygonal cross sectional shape of the bead core having an axially inner angled point (Q1) and an axially outer angled point (Q2) and a side (L1) extending between the points (Q1 and Q2), the side (L1) being adjacent to and substantially parallel to the bead base, the maximum section width (CW) of the bead core in the direction parallel to the side (L1) being in the range of 0.063 to 0.105 times the rim width (RW) between the bead heel points (P) of the design rim, characterised by the axial distance (A) of the axially inner point (Q1) from the bead heel point (P) being 0.073 to 0.125 times the rim width (RW).

An embodiment of the present invention will now be described in detail in conjunction with the accompanying drawings, in which:

Fig.1 is a cross sectional view showing a right half of a tyre according to the present invention;

Fig.2 is an enlarged cross sectional view of the bead portion thereof;

Fig.3 is a graph showing bead durability as a function of the quotient CW/RW;

Fig.4 is a graph showing bead durability as a function of the quotient A/RW;

Fig.5 is a cross sectional view of a bead showing the deformation thereof caused during tyre inflation;

Fig.6 is a graph showing the amount of bead toe lifting as a function of tangential angle variation $\Theta 3$-$\Theta 1$;

Fig.7 is a graph showing the tangential angle variation $\Theta 3$-$\Theta 1$ as a function of the tangential angle $\Theta 1$;

Fig.8 shows other examples of cross sectional shape of the bead core;

Fig.9 is a graph showing bead durability as a function of the amount of bead toe lifting; and

Fig.10 is a cross sectional view showing a prior art tyre.

In Figs.1-5, a heavy duty radial tyre 1 according to the invention is a tubeless truck/bus radial tyre.

The tyre 1 has a tread 2, a pair of axially spaced bead portions 4, and a pair of sidewalls 3 extending between the tread edges and the bead portions 4.

A pair of bead cores 7 is disposed one in each of the bead portions 4. A carcass 5 extends between the bead portions 4 and is turned up around the bead cores 7 from the axially inside to the outside to form a pair of turned up portions 5B and a main portion 5A therebetween. A belt 6 comprising a plurality of plies, in this embodiment four plies 6A is disposed radially outside the carcass 5 and inside the rubber tread 2.

Fig.1 shows the normally inflated condition where the tyre 1 is mounted on its regular rim (J), by engagement of a bead base 11 of each region 4, and inflated to its regular inner pressure.

The rim J is a dropped centre 15° taper rim, which comprises a pair of bead seats 12 each tapered toward the centre of the rim at substantially 15 degrees, a well for tyre mounting between the bead seats 12, and a pair of low flanges 13 each extending radially outwardly from the axially outer edge of each bead seat 12.

The tyre carcass 5 is made of cords arranged radially at 60 to 90 degrees with respect to the tyre equator CO.

For the carcass cords, organic fibre cords, e.g. nylon, polyester, aromatic polyamide, aromatic polyester, rayon or the like, carbon fibre cords, or steel cords can be used.

Each belt ply 6A comprises belt cords arranged parallel to each other, and at least two belt plies are arranged with their respective cords to cross each other and also to cross the carcass ply, so that a triangular construction is formed by the belt cords and carcass cords to reinforce the tread 2 of the tyre.

For the belt cords, organic fibre cords, e.g. aromatic polyamide, aromatic polyester, nylon, polyester, rayon or the like or steel cords are used.

Preferably, each turned up portion 5B of the carcass 5 has a radially outer edge K extending radially outwardly over the radially outer edge F of the flange 13 of the rim J by a radial distance of 25 to 50 mm.

Each bead portion 4 is provided between the carcass main portion 5A and the turned up portion 5B with a hard rubber bead apex 9 extending radially outwardly from the bead core 7.

In this embodiment, the bead core 7 has a depressed hexagonal cross-sectional shape having six angled points and six sides.

The bead core 7 is located such that its major axis (x) (if regarded as an oval) and one side L1 adjacent to the bead base 11 are parallel to the bead base 11.

Therefore, the side L1 is substantially parallel to the bead seat surface 12 when the tyre 1 is mounted on the rim J and inflated to its regular inner pressure.

The bead core 7 has an aspect ratio of 0.3 to 0.6 where the aspect ratio is defined as the ratio (Y/CW) between its maximum section width (CW) in the direction of the major axis (x) or the tapered bead base and its maximum section height (y) in the normal direction to the major axis (x).

The bead core 7 is formed by winding a steel wire, e.g. a piano wire or the like.

The maximum section width (CW) is in the range of 0.063 to 0.105 times the rim width (RW) between the bead heel points (P).

Here, the bead heel point (P) is the point of intersection between the bead base line 11 (tapered at 15 degrees) and the bead side face line 14.

Further, the axial distance (A) between the bead heel point (P) and the angled point (Q1) at the axially inner end of the above-mentioned side (L1) is in the range of 0.073 to 0.125 times the rim width (RW).

Fig.3 shows the relationship between bead durability and the ratio CW/RW of the maximum section width (CW) to the rim width (RW).

When the width (CW) is less than 0.063 times the rim width (RW), the movement of the bead portion against the rim increases and bead durability is reduced.

On the other hand, when the quotient CW/RW is more than 0.105, tyre to rim mounting becomes too difficult.

Fig.4 shows the relationship between bead durability and the ratio A/RW of the axial distance (A) to the rim width (RW).

When the distance (A) is less than 0.073 times the rim width (RW), a rubber layer 16 disposed axially outside the carcass tuned up portion 5B becomes liable to be cracked and bead durability is decreased.

In this embodiment, in the bead portion 4 under the normally inflated condition, the angle Θ1 of a tangential line (T1) to the carcass 5 at a point (R) is set to be not more than 55 degrees with respect to the axial direction.

Here, the point (R) is on the axially inside of the carcass 5 at the same axial position as the above-mentioned axially inner angled point (Q1) of the bead core 7.

The effectiveness of this is shown in the following test results.

Fig.5 shows the tangential angle variation Θ3-Θ1 when the tyre inner pressure is increased from 0.5 $kgf/cm^2$ to the regular inner pressure, where the carcass 5, the tangential line T1, the point R, and the tangential angle Θ1 are at the regular pressure, and 5a, T1a, Ra and Θ3 are at 0.5 $kgf/cm^2$.

The tangential angles Θ1 and Θ3 and the amount of the bead toe lifting were measured by an X-ray CT-scanner. The results are shown in Fig.6.

As shown in Fig.6, when the tangential angle variation Θ3-Θ1 was less than 2.5 degrees, the amount (L) of toe lifting was substantially zero.

When the variation was more than 2.5 degrees, the lifting amount increased in substantially direct proportion to the increase in the tangential angle variation Θ3-Θ1.

Further, it was shown that the tangential angle variation Θ3-Θ1 is in direct proportion to the tangential angle Θ1 as shown in Fig.7.

Therefore, by setting the tangential angle Θ1 less than 55 degrees the tangential angle variation Θ3-Θ1 was kept to less than 2.5 degrees. As a result, the amount of bead toe lifting is substantially zero.

If the tangential angle Θ1 was less than 47 degrees, then the tangential angle variation Θ3-Θ1 became a negative value, as shown in Fig.7.

In this case, the tangential angle increases as the tyre inner pressure increases to the regular inner pressure from 0.5 $kgf/cm^2$. Therefore, the compressive stress to which the bead portion 4 is subjected under a loaded condition becomes large and the bead durability is liable to decrease.

Therefore, the tangential angle Θ1 is preferably in the range of 55 to 47 degrees.

Truck/bus radial tyres of size 11R22.5 having the structure shown in Figs.1 and 2 and specifications set out in Table 1 were prepared.

Each test tyre was mounted on its regular rim and inflated to its regular inner pressure and then tested for bead toe lifting and bead durability.

In the durability test, the running distance till the bead portion was cracked and/or air leakage occurred was measured using a drum tester under an inner pressure of 8 $kgf/cm^2$, a tyre load of 6000 kg, and a speed of 20 km/hr.

The results are indicated in Table 1 by an index based on the assumption that the reference tyre is 100. The larger the index, the better the durability.

TABLE 1

| | Ex.1 | Ex.2 | Ex.3 | Ex.4 | Ref.1 | Ref.2 |
|---|---|---|---|---|---|---|
| Carcass<br>Cord material<br>Cord angle (deg) | steel<br>90 | | | | steel<br>90 | |
| Belt<br>Cord material<br>Ply number | steel<br>4 | | | | steel<br>4 | |
| CW/RW | 0.081 | 0.081 | 0.063 | 0.081 | 0.060 | 0.060 |
| A/RW | 0.095 | 0.095 | 0.073 | 0.095 | 0.070 | 0.070 |
| Tangential angle (Θ1)(deg) | 47 | 55 | 56 | 56 | 56 | 55 |
| Bead toe lifting (L) (mm) | 0 | 0 | 0 | 0.5 | 1.2 | 1.2 |
| Bead durability (index) | 103 | 108 | 103 | 105 | 98 | 100 |

It was confirmed from the test results that the working example tyres were effectively prevented from toe lifting and improved in durability in comparison with the reference tyres.

In the present invention, for the sectional shape of the bead core, various shapes can be used as, for example, shown as 7A to 7G in Fig.8, in addition to the hexagonal shape shown in Figs.1 and 2. The present invention can be applied to tubed tyres in addition to tubeless radial tyres.

## Claims

1. A heavy duty radial tyre comprising a tread (2) having tread edges, a pair of axially spaced bead portions (4) having a bead base (11) to fit a 15° tapered bead seat (12) of its regular rim (J), a pair of sidewalls (3) extending between the tread edges and the bead portions (4), a bead core (7) disposed in each of the bead portions (4) and having a polygonal cross sectional shape, a radial carcass (5) extending between the bead portions (4) and turned up around the bead cores (7), and a belt (6) disposed radially outside the carcass (5) and radially inside the tread (2), the polygonal cross sectional shape of the bead core (7) having an axially inner angled point (Q1) and an axially outer angled point (Q2) and a side (L1) extending between the points (Q1 and Q2), the side (L1) being adjacent to and substantially parallel to the bead base (11), the maximum section width (CW) of the bead core (7) in the direction parallel to the side (L1) being in the range of 0.063 to 0.105 times the rim width (RW) between the bead heel points (P) of the design rim, characterised by the axial distance (A) of the axially inner point (Q1) from the bead heel point (P) being 0.073 to 0.125 times the design rim width (RW).

2. The heavy duty radial tyre according to claim 1, characterised in that the aspect ratio (y/CW) of the cross sectional shape of the bead core (7) is in the range of 0.3 to 0.6.

3. The heavy duty radial tyre according to claim 1 or 2, characterised in that the cross sectional shape of the bead core (7) is a hexagon.

4. The heavy duty radial tyre according to claim 1, 2 or 3, characterised in that in each bead portion (4) the tangential angle (Θ1) of the carcass at a point (R) is not more than 55 degrees with respect to the tyre axial direction where the point (R) is on the axially inner side of the carcass (5) at the same axial position as the axially inner angled point (Q1) of the bead core (7).

5. The heavy duty radial tyre according to claim 4, characterised in that the tangential angle (Θ1) is in the range of 55 to 47 degrees with respect to the tyre axial direction.

## Patentansprüche

1. Ein Schwerlastradialreifen mit einer Lauffläche (2) mit Laufflächenkanten, einem Paar von axial beabstandeten Wulstabschnitten (4), die eine Wulstbasis (11) zur Anpassung an eine 15°-Schrägschulter (12) seiner regulären Felge (J) aufweisen, einem Paar von Seitenwänden (3), die sich zwischen den Laufflächenkanten und den Wulstabschnitten (4) erstrecken, einem Wulstkern (7), der in jedem der Wulstabschnitte (4) angeordnet ist und eine polygonale Querschnittsform aufweist, einer radialen Karkasse (5), die sich zwischen den Wulstabschnitten (4) erstreckt und um die Wulstkerne (7) herum umgeschlagen ist, und einem Gürtel (6), der radial außerhalb der Karkasse (5) und radial innerhalb der Lauffläche (2) angeordnet ist, wobei die polygonale Querschnittsform des Wulstkerns (7) einen axial inneren Winkelpunkt (Q1) und einen axial äußeren Winkelpunkt (Q2) sowie eine Seite (L1) aufweist, die sich zwischen den Punkten (Q1 und Q2) erstreckt, die Seite (L1) benachbart und im wesentlichen parallel zur Wulstbasis (11) liegt, und die maximale Schnittbreite (CW) des Wulstkerns (7) in der Richtung parallel zur Seite (L1) im Bereich des 0,063- bis 0,105-fachen der Felgenbreite (RW) zwischen den Wulstfersenpunkten (P) der Designfelge liegt,
dadurch **gekennzeichnet,**
daß die axiale Entfernung (A) des axial inneren Punktes (Q1) vom Wulstfersenpunkt (P) das 0,073-0,125-fache der Designfelgenbreite (RW) beträgt.

2. Der Schwerlastradialreifen nach Anspruch 1,
dadurch **gekennzeichnet,**
daß das Längenverhältnis (y/CW) der Querschnittsform des Wulstkerns (7) im Bereich von 0,3 bis 0,6 liegt.

3. Der Schwerlastradialreifen nach Anspruch 1 oder 2,
dadurch **gekennzeichnet,**
daß die Querschnittsform des Wulstkerns (7) ein Hexagon ist.

4. Der Schwerlastradialreifen nach Anspruch 1, 2 oder 3,
dadurch **gekennzeichnet,**
daß in jedem Wulstabschnitt (4) der Tangentialwinkel (Θ1) der Karkasse an einem Punkt (R) nicht mehr als 55 Grad bezüglich der Reifenaxialrichtung beträgt, wobei sich der Punkt (R) auf der axial inneren Seite der Karkasse (5) an der gleichen axialen Position wie der axial innere Winkelpunkt (Q1) des Wulstkerns (7) befindet.

5. Der Schwerlastradialreifen nach Anspruch 4,
dadurch **gekennzeichnet,**
daß der Tangentialwinkel (Θ1) im Bereich von 55 bis 47 Grad bezüglich der Reifenaxialrichtung liegt.

## Revendications

1. Pneumatique à carcasse radiale pour charges élevées, comprenant une bande de roulement (2) ayant des bords, une paire de parties de talon (4) qui sont axialement espacées et qui ont une base (11) de calon destinée à s'ajuster sur un siège (12) de talon ayant une inclinaison de 15° dans la jante normale (J), deux flancs (3) disposés entre les bords de la bande de roulement et les parties de talon (4), une tringle (7) disposée dans chacune des parties de talon (4) et ayant une section polygonale, une carcasse radiale (5) disposée entre les parties de talon (4) et repliée autour des tringles (7), et une ceinture (6) disposée radialement à l'extérieur de la carcasse (5) et radialement à l'intérieur de la bande de roulement (2), la configuration polygonale en coupe de la tringle (7) ayant un sommet axialement interne (Q1) et un sommet axialement externe (Q2) et un côté (L1) placé entre les sommets (Q1 et Q2), le côté (L1) étant adjacent à la base (11) de talon et pratiquement parallèle à celle-ci, la largeur maximale (CW) en coupe de la tringle (7) en direction parallèle au côté (L1) étant comprise entre 0,063 et 0,105 fois la largeur (RW) de la jante entre les points (P) de bout de talon de la jante nominale, caractérisé en ce que la distance axiale (A) du sommet axialement interne (Q1) au point de bout de talon (P) est comprise entre 0,073 et 0,125 fois la largeur de la jante nominale (RW).

2. Pneumatique à carcasse radiale pour charges élevées selon la revendication 1, caractérisé en ce que le rapport d'allongement (y/CW) de la configuration en coupe de la tringle (7) est compris entre 0,3 et 0,6.

3. Pneumatique à carcasse radiale pour charges élevées selon la revendication 1 ou 2, caractérisé en ce que la configuration en coupe de la tringle (7) est un hexagone.

4. Pneumatique à carcasse radiale pour charges élevées selon la revendication 1, 2 ou 3, caractérisé en ce que, dans chaque partie de talon (4), l'angle de tangence ($\theta$1) de la carcasse au point (R) ne dépasse pas 55° par rapport à la direction axiale du pneumatique à l'endroit où le point (R) se trouve du côté axialement interne de la carcasse (5) à la même position axiale que le sommet axialement interne (Q1) de la tringle (7).

5. Pneumatique à carcasse radiale pour charges élevées selon la revendication 4, caractérisé en ce que l'angle de tangence ($\theta$1) est compris entre 55 et 47° par rapport à la direction axiale du pneumatique.

Fig. 1

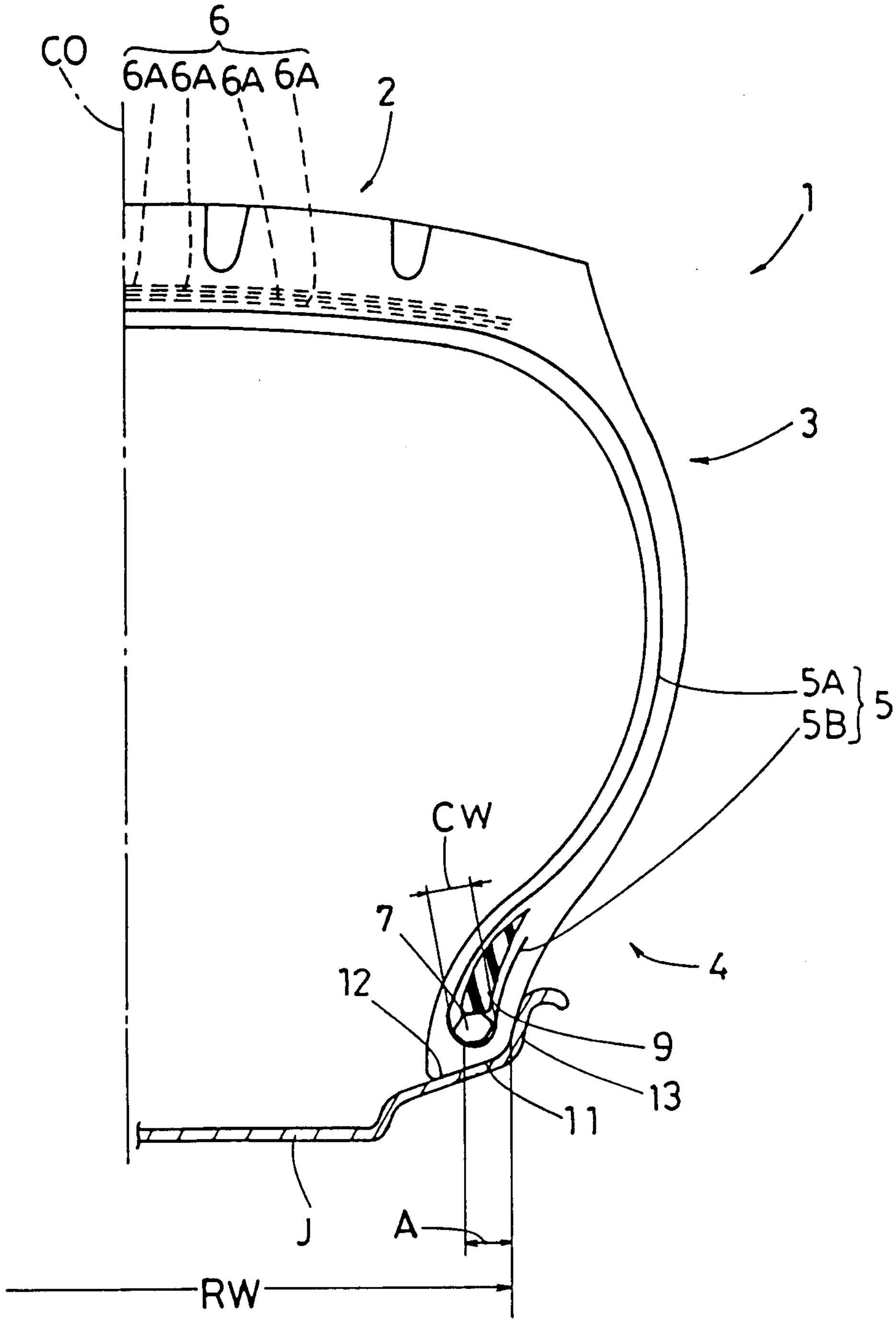

Fig.2

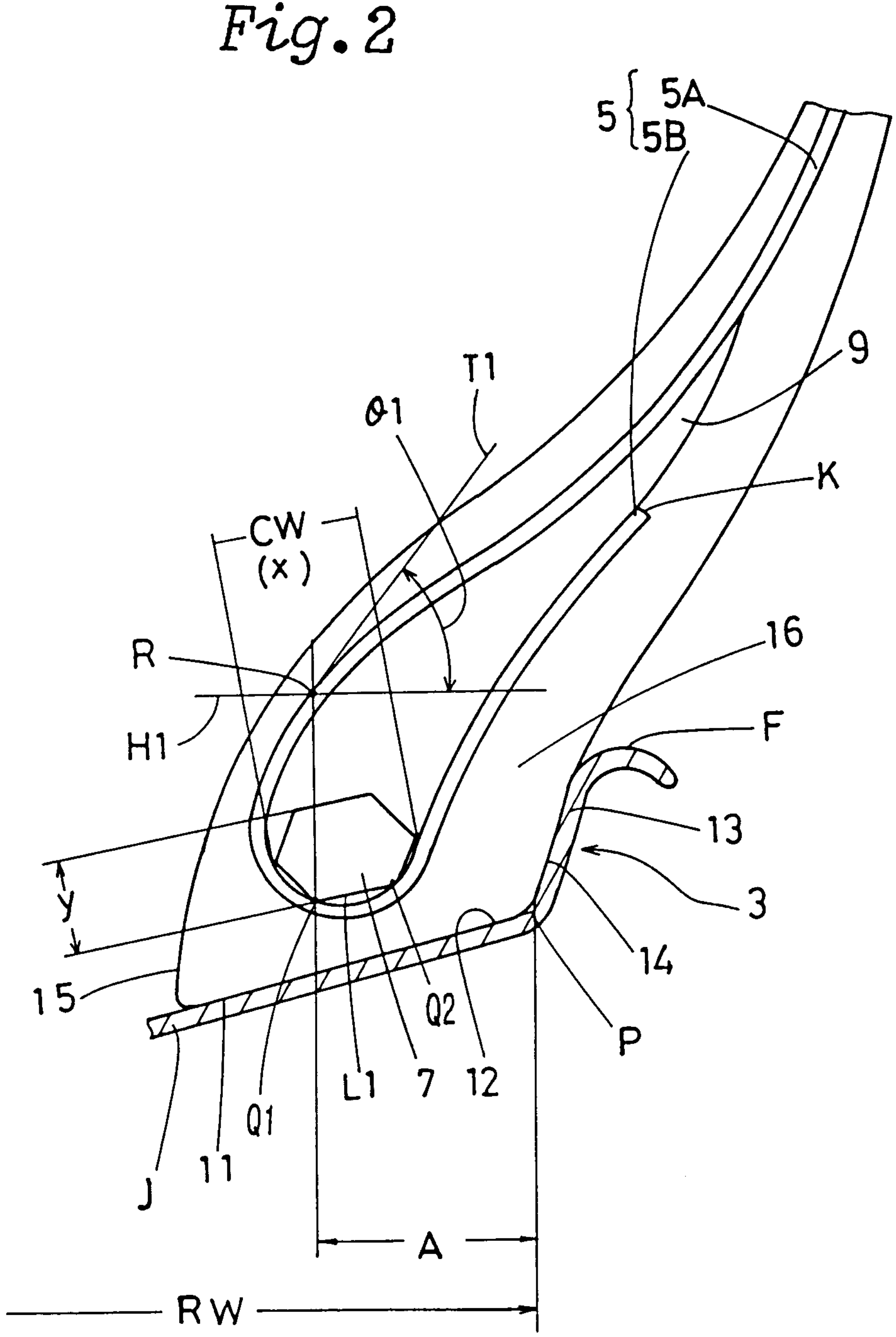

Fig. 3

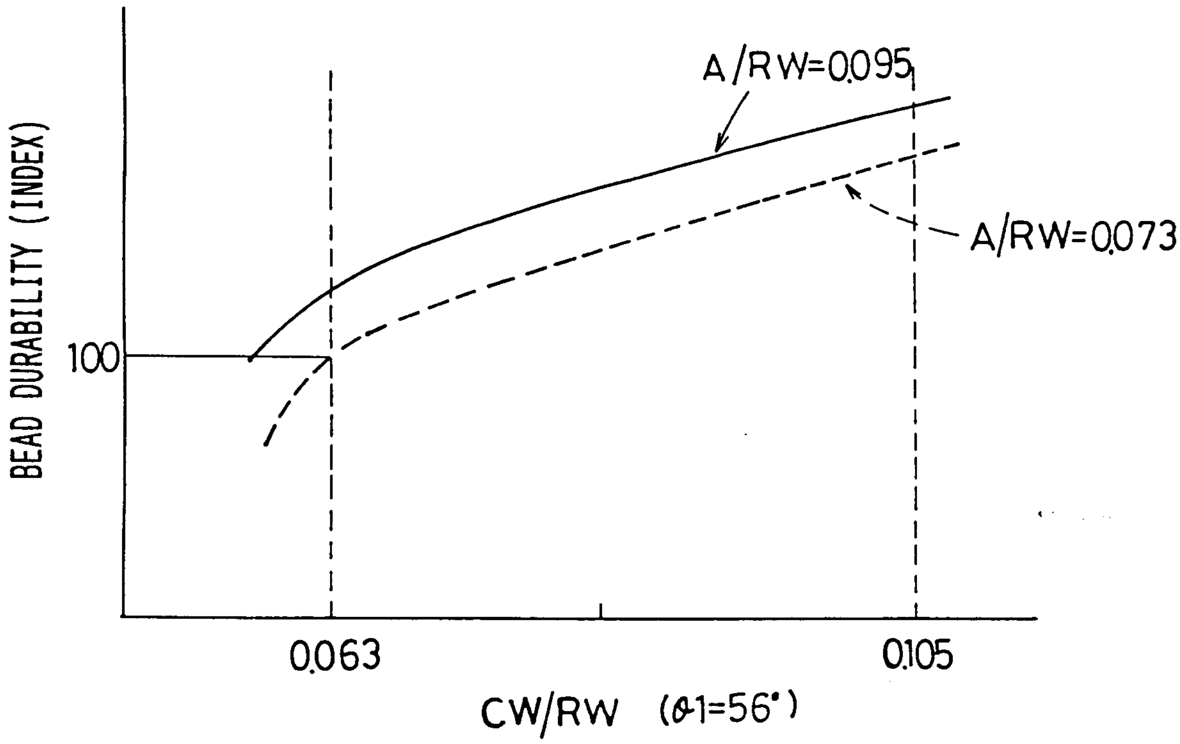
A/RW=0.095
A/RW=0.073
BEAD DURABILITY (INDEX)
100
0.063
0.105
CW/RW (θ1=56°)

Fig. 4

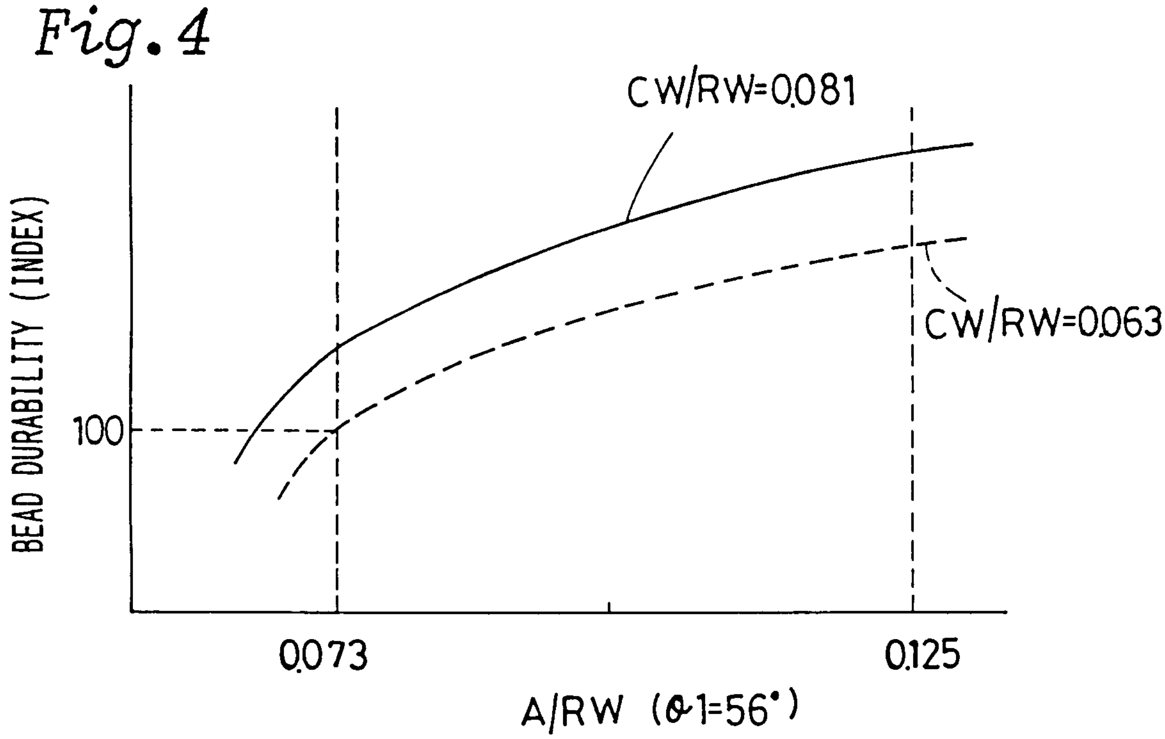
CW/RW=0.081
CW/RW=0.063
BEAD DURABILITY (INDEX)
100
0.073
0.125
A/RW (θ1=56°)

Fig.5

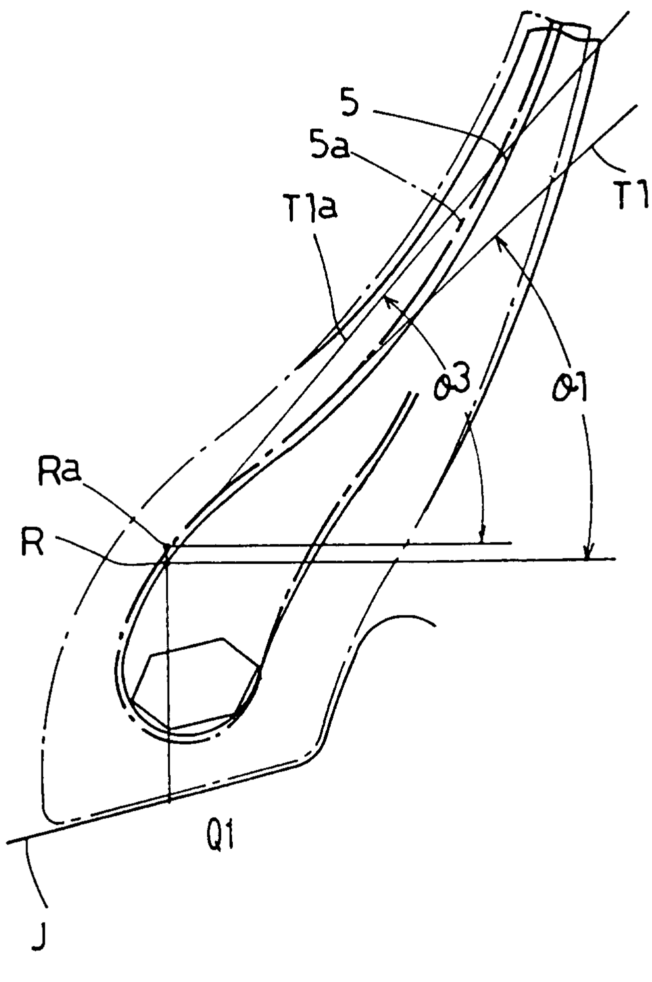

Fig.6

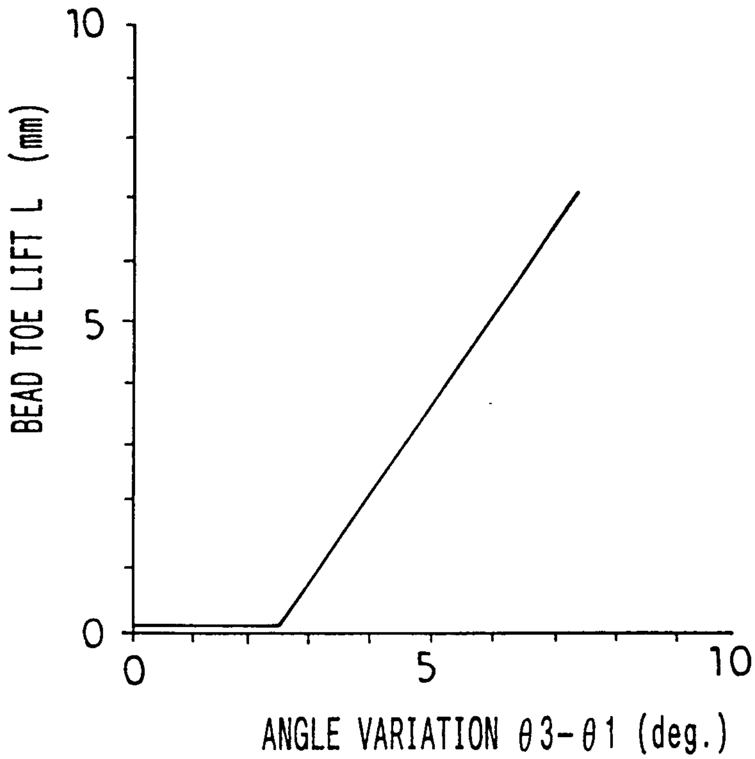
10
5
0
BEAD TOE LIFT L (mm)
0
5
10
ANGLE VARIATION θ3−θ1 (deg.)

Fig.7

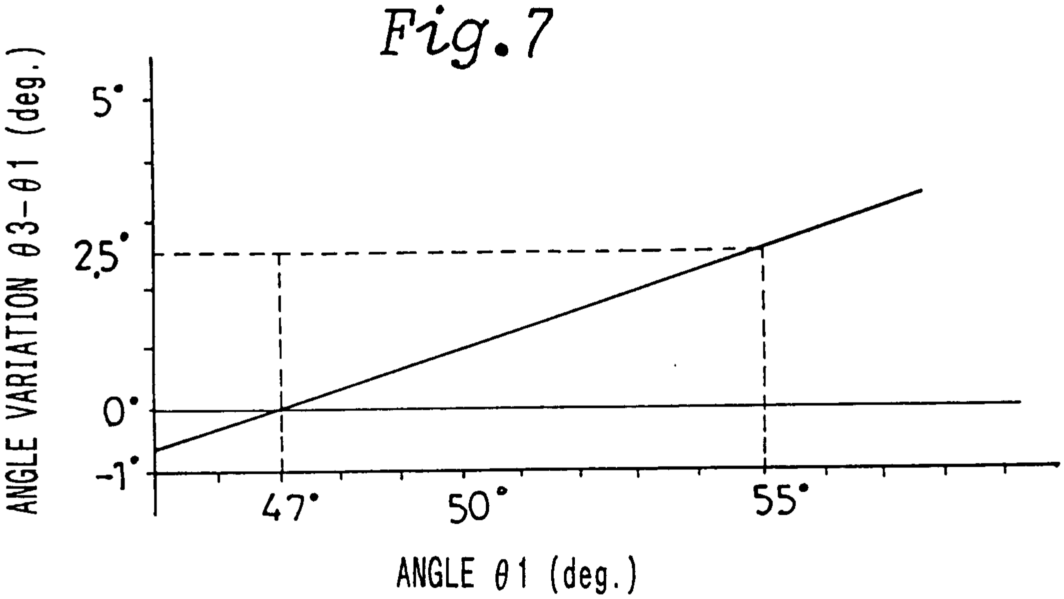
ANGLE VARIATION θ3−θ1 (deg.)
5°
2,5°
0°
-1°
47°
50°
55°
ANGLE θ1 (deg.)

Fig.8

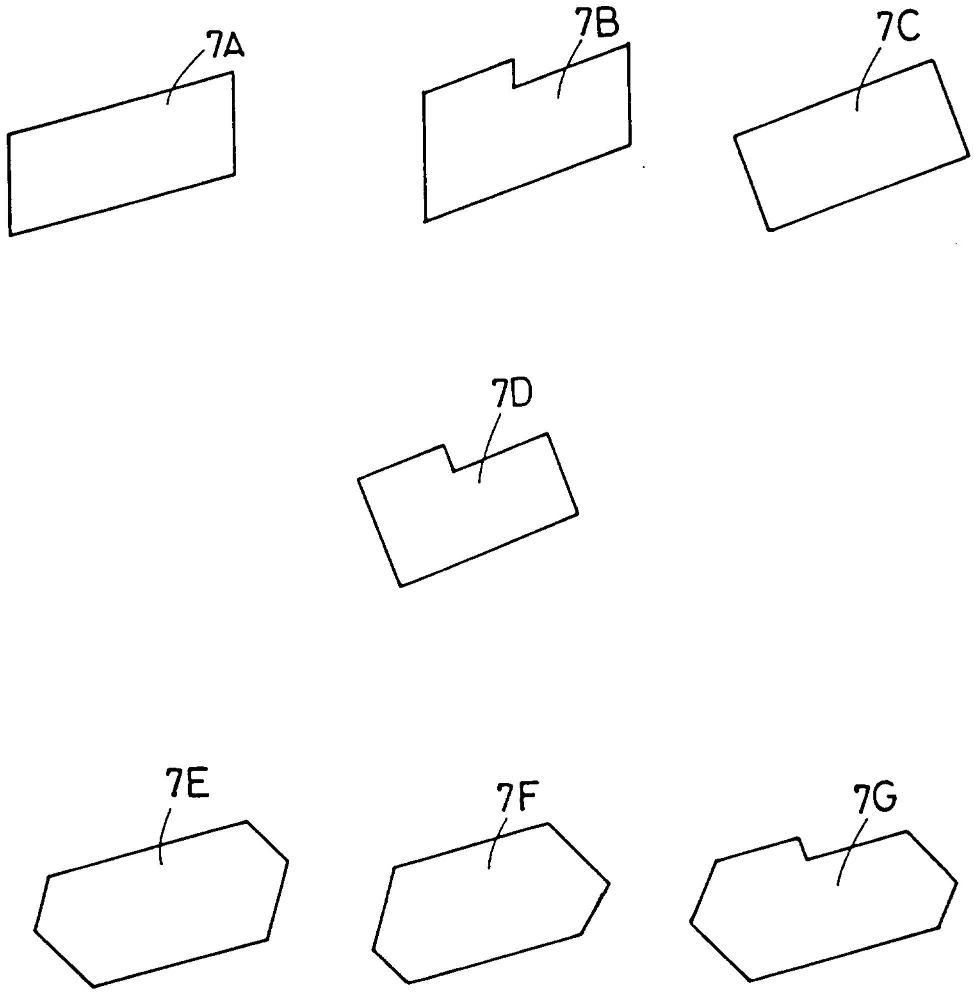

Fig. 9

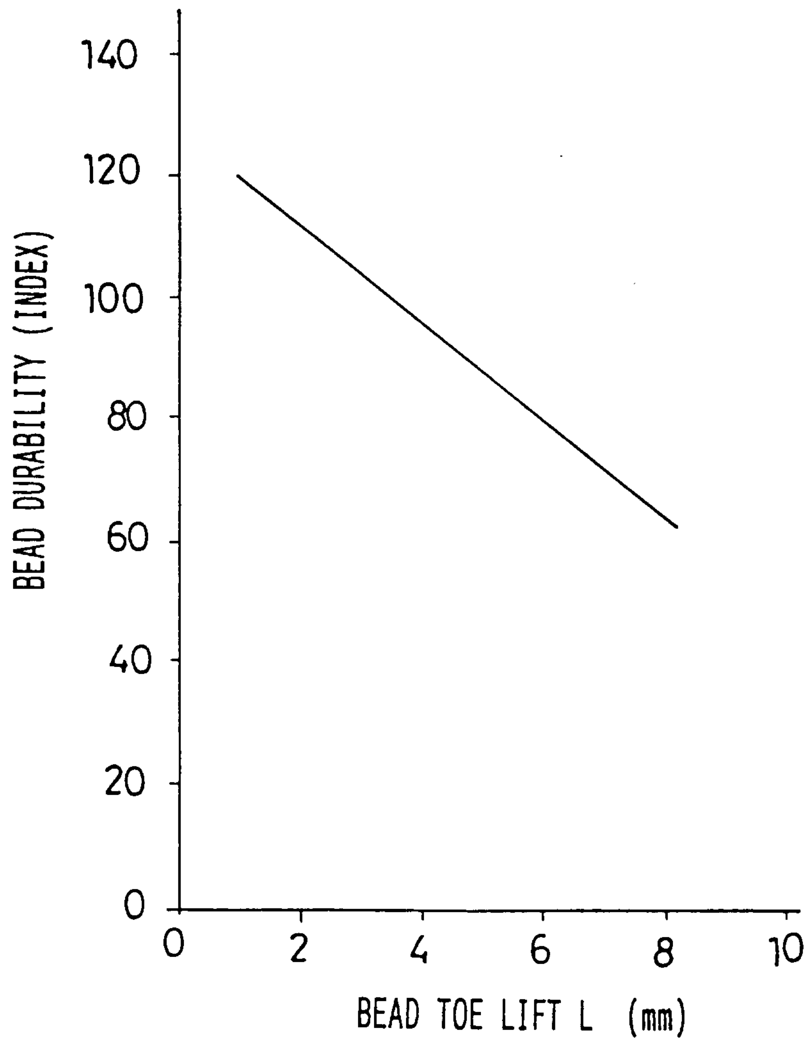
140
120
100
80
60
40
20
0
BEAD DURABILITY (INDEX)
0
2
4
6
8
10
BEAD TOE LIFT L (mm)

*Fig. 10*